# EUROPEAN PATENT APPLICATION

(11) **EP 4 621 744 A1**
(43) Date of publication of application: **24.09.2025**
(21) Application number: 25163777.3
(22) Date of filing: 14.03.2025
(51) Int. Cl.: G07C 9/00

(54) **COMMUNICATION DEVICE, SYSTEM INCLUDING COMMUNICATION DEVICE AND LOCKING/UNLOCKING DEVICE, AND CONTROL PROGRAM FOR COMMUNICATION DEVICE**

(30) Priority: 18.03.2024 US 202463566861 P; 24.05.2024 JP 2024084608
(71) Applicant: Minebea Mitsumi Inc., Kitasaku-gun, Nagano 3890293 (JP)
(72) Inventor: ASAMI, Kuniaki, NAGANO, 389-0293 (JP); OSAKI, Shohei, TAMA-SHI, 206-8567 (JP); KIKUCHI, Takumi, NAGANO, 389-0293 (JP)
(74) Representative: Regimbeau

(57) **Abstract**

Object

Proposed are a communication device for reliably locking and unlocking an electronic lock even when a plurality of communication devices attempt to simultaneously connect to a locking/unlocking device, a system including the communication device and the locking/unlocking device, and a control program for the communication device.

Solution

A communication device starts connection to a locking/unlocking device provided near a door of a building when receiving an advertisement signal transmitted from the locking/unlocking device. The communication device is configured to retry a scan for receiving the advertisement signal after a delay time different from a delay time of another communication device connectable to the locking/unlocking device when the communication device determines the connection failed.

## Description

### Technical Field

The present invention relates to a communication device connecting in a wirelessly communicable manner to a locking/unlocking device provided near a door of a building, a system including the communication device and the locking/unlocking device, and a control program for the communication device.

### Background Art

For example, Patent Document 1 discloses a technology. In the technology, a locking/unlocking device provided at a door of a building locks and unlocks an electronic lock through wireless communication with an electronic key being a portable device.

### Citation List

### Patent Literature

Patent Document 1: JP 4019257 B

### Summary of Invention

### Technical Problem

However, for example, when a parent and a child each carries an electronic key and come home together, there is a problem in that wireless communications by the plurality of electronic keys collide with each other and an electronic lock is not unlocked.

Therefore, an object of the present invention is to provide a technology for reliably locking and unlocking an electronic lock even when a plurality of communication devices simultaneously attempt to connect to a locking/unlocking device.

### Solution to Problem

The present invention is a communication device starting connection to a locking/unlocking device provided near a door of a building when receiving an advertisement signal transmitted from the locking/unlocking device, wherein the communication device is configured to retry a scan for receiving the advertisement signal after a delay time different from a delay time of another communication device connectable to the locking/unlocking device when the communication device determines the connection failed.

### Brief Description of Drawings

FIG. 1 is a schematic view of a system including a locking/unlocking device and an electronic key.
FIG. 2 is a block diagram of the system including the locking/unlocking device and the electronic key.
FIG. 3 is a schematic view of a system including the locking/unlocking device and a plurality of the electronic keys.
FIG. 4 is a timing chart illustrating a flow of failing to unlock an electronic lock.
FIG. 5 is a timing chart illustrating a flow of unlocking an electronic lock according to the present invention.
FIG. 6 is a flowchart illustrating the flow of unlocking the electronic lock according to the present invention.
FIG. 7 is a timing chart for describing a first modification example of a delay time.
FIG. 8 is a timing chart for describing a second modification example of the delay time.

### Description of Embodiments

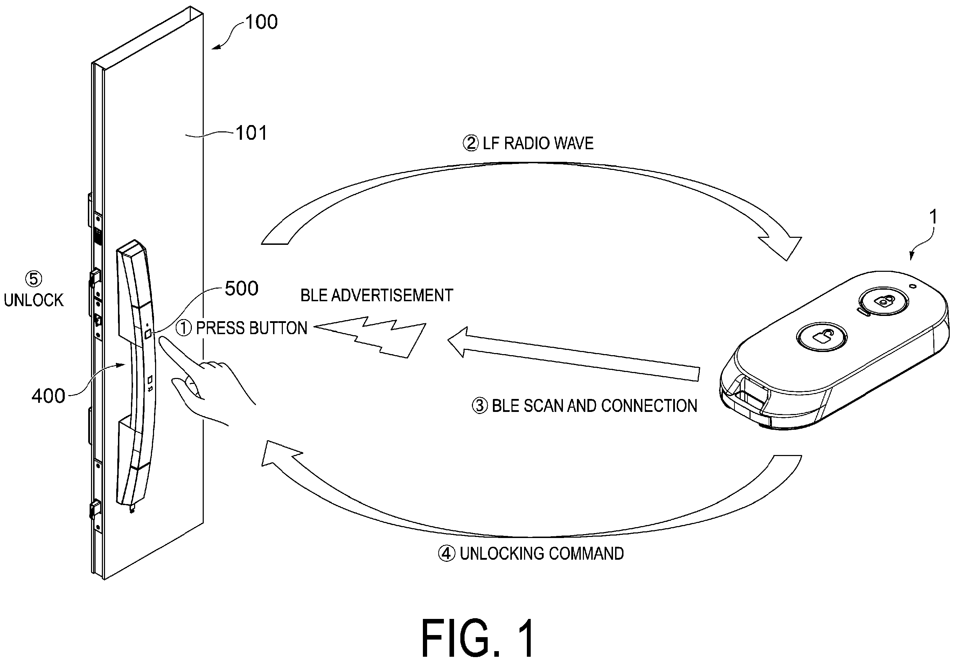

FIG. 1 is a schematic view of a system including a locking/unlocking device and an electronic key as a communication device.

The locking/unlocking device (not illustrated) is embedded in a door 100 of a building. An outer door handle 400 is provided at an outer surface 101 of the door 100. The outer door handle 400 is provided with a button 500. A user carrying an electronic key 1 presses the button 500, so that an electronic lock is locked or unlocked.

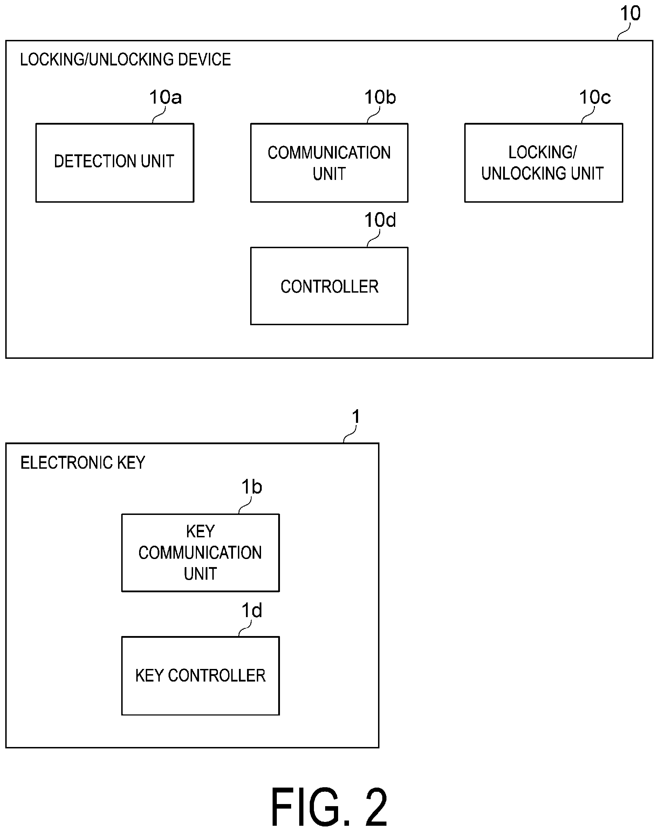

FIG. 2 is a block diagram of the system including the locking/unlocking device and the electronic key.

A locking/unlocking device 10 includes a detection unit 10a detecting that the user presses the button 500, a communication unit 10b performing wireless communication with the electronic key 1, a locking/unlocking unit 10c for electrically locking and unlocking the electronic lock, and a controller 10d controlling the detection unit 10a, the communication unit 10b, and the locking/unlocking unit 10c. The controller 10d includes a well-known computer including a CPU, a memory, and the like.

The electronic key 1 is a small portable device capable of being carried by the user. The electronic key 1 includes a key communication unit 1b performing wireless communication with the communication unit 10b of the locking/unlocking device 10, and a key controller 1d controlling the key communication unit 1b. The key controller 1d includes a well-known computer including a CPU, a memory, and the like.

Moreover, the key controller 1d stores a program for controlling an operation of the electronic key 1 in the memory. The program can be stored using various types of non-transitory computer readable media and supplied to the computer. The non-transitory computer readable media include various types of tangible storage media. Examples of the non-transitory computer readable media include a magnetic recording medium (specifically, a flexible disk, a magnetic tape, and a hard disk drive), a magneto-optical recording medium (specifically, a magneto-optical disk), a compact disc read only memory (CD-ROM), a CD-R, a CD-R/W, a semiconductor memory (specifically, a mask ROM, a programmable ROM (PROM), and an erasable PROM (EPROM)), a flash ROM, and a random access memory (RAM). In addition, the program may be supplied to the computer using various types of transitory computer readable media. Examples of the transitory computer readable media include an electrical signal, an optical signal, and an electromagnetic wave. The transitory computer readable media can supply the program to the computer via a wired communication path such as an electric wire and an optical fiber or a wireless communication path.

Referring back to FIG. 1, a flow of unlocking the electronic lock will be described.
(1) When the user presses the button 500, (2) the locking/unlocking device detects that the user has pressed the button 500 via the detection unit and transmits a low frequency (LF) radio wave via the communication unit.
(3) When receiving the LF radio wave, the electronic key 1 starts a Bluetooth Low Energy (BLE) scan. Note that the locking/unlocking device always transmits a BLE advertisement signal via the communication unit at regular intervals (advertisement interval T). When receiving the BLE advertisement signal, the electronic key 1 transmits a connection request to the locking/unlocking device and starts connection to the locking/unlocking device. When the connection to the locking/unlocking device is completed, (4) the electronic key 1 transmits an unlocking command, and (5) the locking/unlocking device controls the locking/unlocking unit to unlock the electronic lock.

However, when there are a plurality of the electronic keys, there is a problem in that wireless communications of the plurality of electronic keys collide with each other and the electronic lock is not unlocked. This problem will be described below.

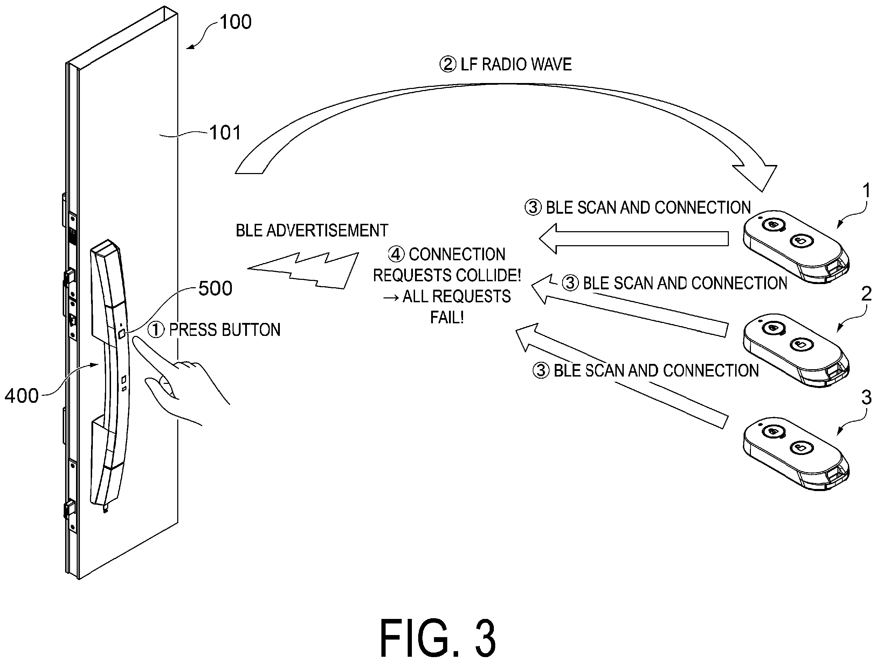

FIG. 3 is a schematic view of a system including the locking/unlocking device and a plurality of the electronic keys.

Operations (1) and (2) are the same as the operations in the case described above with reference to FIG. 1.

(3) When receiving the LF radio wave, each of electronic keys 1, 2, and 3 start a BLE scan and transmit a connection request. However, none of the electronic keys 1, 2, and 3 receives an expected response from the locking/unlocking device. When each of the electronic keys 1, 2, and 3 does not receive an expected response from the locking/unlocking device even after a plurality of retries, (4) each of the electronic keys 1, 2, and 3 determines the connection failed. This is because the plurality of electronic keys 1, 2, and 3 simultaneously attempt to connect to the locking/unlocking device and the connection requests collide with each other.

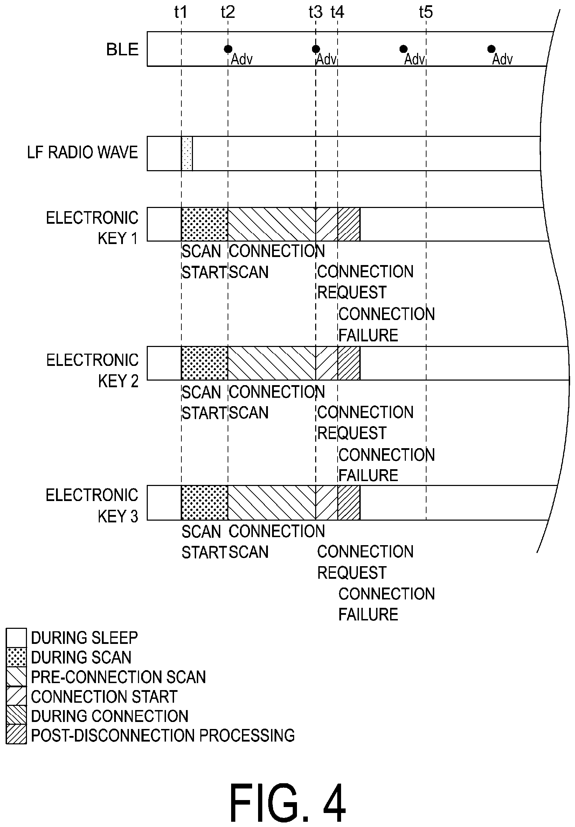

A flow of failing to unlock the electronic lock will be described in detail with reference to a timing chart of FIG. 4.

The uppermost graph indicates that the locking/unlocking device transmits a BLE advertisement signal Adv at regular intervals.

The second graph from the top indicates the timing of the locking/unlocking device transmitting an LF radio wave.

The third and subsequent graphs from the top indicate operations of the electronic keys 1, 2, and 3.

When the user presses the button 500 at t1, the locking/unlocking device transmits an LF radio wave.

When receiving the LF radio wave, each of the electronic keys 1, 2, and 3 starts a BLE scan.

When the locking/unlocking device transmits a BLE advertisement signal Adv at t2, each of the electronic keys 1, 2, and 3 receives the BLE advertisement signal Adv and starts a connection scan.

When the locking/unlocking device transmits the next BLE advertisement signal Adv at t3, each of the electronic keys 1, 2, and 3 receives the BLE advertisement signal Adv and transmits a connection request. Here, since the locking/unlocking device simultaneously receives the connection requests from the electronic keys 1, 2, and 3, the locking/unlocking device can process none of the connection requests from the electronic keys 1, 2, and 3 and fails in connection.

At t4, each of the electronic keys 1, 2, and 3 determines the connection failed and performs post-disconnection processing.

The present invention proposes a technology for reliably locking and unlocking an electronic lock even when a plurality of electronic keys simultaneously attempt to connect to a locking/unlocking device, and the technology will be described below.

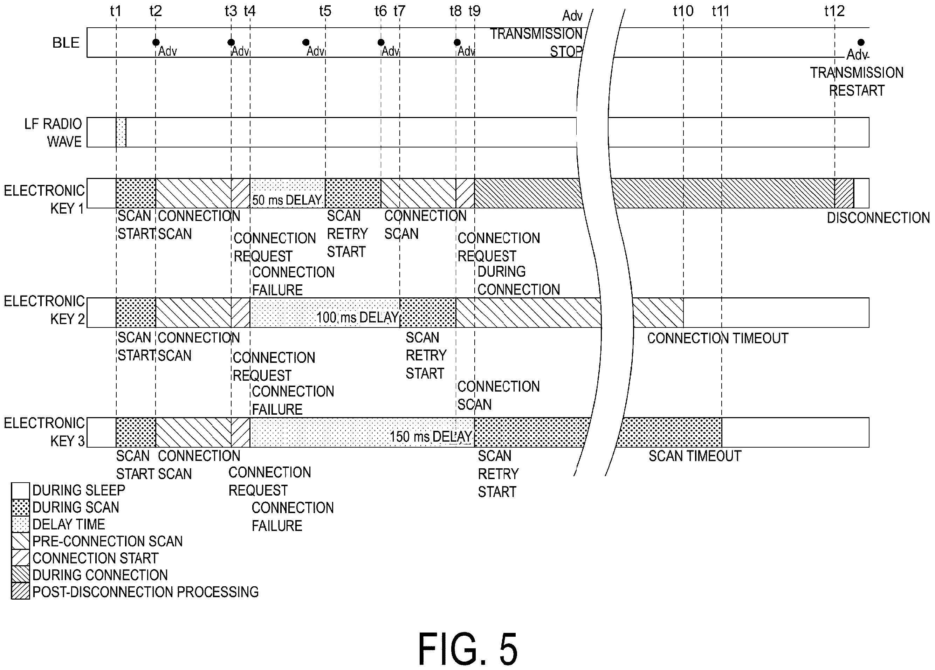

FIG. 5 is a timing chart showing a flow of unlocking an electronic lock according to the present invention.

Operations from t1 to t3 are the same as the operations described above with reference to FIG. 4.

When it is determined that the connection has failed at t4, the electronic key 1 retries a BLE scan for receiving the BLE advertisement signal after a delay time different from delay times of the other electronic keys 2 and 3 connectable to the locking/unlocking device (hereinafter, referred to as a scan retry). In the present embodiment, the electronic keys 1, 2, and 3 have ID codes of 1, 2, and 3, respectively, and the delay times are based on the ID codes of 1, 2, and 3 unique to the electronic keys 1, 2, and 3.

The electronic key 1 starts a scan retry at t5 after a delay time of 50 ms, the electronic key 2 starts a scan retry at t7 after a delay time of 100 ms, and the electronic key 3 starts a scan retry at t9 after a delay time of 150 ms.

When the locking/unlocking device transmits the BLE advertisement signal at t6, the electronic key 1 receives the BLE advertisement signal and starts a connection scan.

When the locking/unlocking device transmits the next BLE advertisement signal at t8, the electronic key 1 receives the BLE advertisement signal and transmits a connection request.

At this time point (t8), since the electronic key 2 is performing a scan retry and the electronic key 3 has not yet started a scan retry, neither of these keys transmits a connection request. Therefore, the connection request of the electronic key 1 does not collide with the connection requests of the electronic keys 2 and 3.

At t9, the connection of the electronic key 1 is completed.

Thereafter, the electronic key 1 transmits an unlocking command, and the locking/unlocking device unlocks the electronic lock.

Note that once the connection is completed, the locking/unlocking device stops transmission of the BLE advertisement signal until disconnection at t12.

As described above, the electronic key 2 starts a scan retry at t7 after a delay time of 100 ms.

When the locking/unlocking device transmits the BLE advertisement signal at t8, the electronic key 2 receives the BLE advertisement signal and starts a connection scan. However, since the locking/unlocking device stops transmission of the BLE advertisement signal at and after t8, the electronic key 2 does not receive the next BLE advertisement signal. Therefore, the electronic key 2 continues the connection scan.

When a predetermined connection timeout period elapses at t10, the electronic key 2 enters a sleep state.

The time point t10 after elapse of the predetermined connection timeout period needs to be set before a time point t12 at the disconnection of the electronic key 1. This is because the locking/unlocking device restarts transmission of the BLE advertisement signal after the time point t12 at the disconnection of the electronic key 1. Therefore, if the electronic key 2 continues the connection scan until after t12, the electronic key 2 receives the BLE advertisement signal and transmits a connection request, and, as a result, the electronic key 2 is connected.

As described above, the electronic key 3 starts a scan retry at t9 after a delay time of 150 ms.

Since the locking/unlocking device stops transmission of the BLE advertisement signal at and after t9, the electronic key 3 does not receive the BLE advertisement signal and continues the scan retry.

When a predetermined scan timeout period elapses at t11, the electronic key 3 enters a sleep state.

The time point t11 after elapse of the predetermined scan timeout period also needs to be set before the time point t12 at the disconnection of the electronic key 1. This is because the locking/unlocking device restarts transmission of the BLE advertisement signal after the time point t12 at the disconnection of the electronic key 1. Therefore, if the electronic key 3 continues the scan retry until after t12, the electronic key 3 receives the BLE advertisement signal and transmits a connection request, and, as a result, the electronic key 3 is connected.

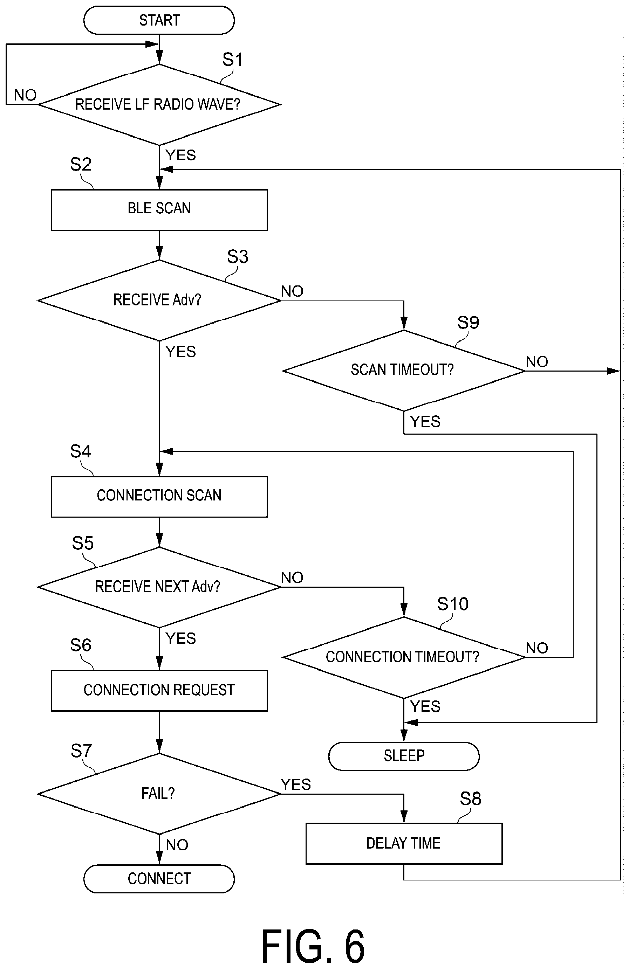

FIG. 6 is a flowchart illustrating a flow of unlocking the electronic lock according to the present invention.

When an electronic key receives an LF radio wave in step S1, the electronic key starts a BLE scan in step S2.

When the electronic key receives a BLE advertisement signal Adv in step S3, the electronic key starts a connection scan in step S4.

When the electronic key receives the next BLE advertisement signal Adv in step S5, the electronic key transmits a connection request and starts connection to the locking/unlocking device in step S6.

When the electronic key determines the connection failed in step S7, the electronic key returns to step S2 after elapse of a delay time different from delay times of the other electronic keys connectable to the locking/unlocking device in step S8.

When the electronic key determines the connection succeeded in step S7, the connection of the electronic key is completed.

When the electronic key does not receive the BLE advertisement signal Adv in step S3 and this state continues until a predetermined scan timeout period elapses in step S9, the electronic key enters a sleep state.

When the electronic key does not receive the next BLE advertisement signal Adv in step S5 and this state continues until a predetermined connection timeout period elapses in step S10, the electronic key enters a sleep state.

In the above-described embodiment, the advertisement interval T is 50 ms, the electronic key 1 has a delay time of 50 ms (= T × 1), the electronic key 2 has a delay time of 100 ms (= T × 2), and the electronic key 3 has a delay time of 150 ms (= T × 3). That is, the delay time is a value obtained by multiplying the advertisement interval T by the ID code (1, 2, or 3) unique to each electronic key.

In the above-described embodiment, after an unlocking operation is performed by the user on the locking/unlocking device, specifically, after the button 500 is pressed, the advertisement interval T is shortened by a predetermined period (for example, two seconds).

That is, the locking/unlocking device always transmits the BLE advertisement signal at regular advertisement intervals T (for example, 300 ms). However, if the advertisement interval T remains at it is, the electronic key 1 has a delay time of 300 ms, and it takes time until unlocking. Therefore, a time until unlocking can be shortened by shortening the advertisement interval T from 300 ms to 50 ms after the button 500 is pressed.

A modification example of the delay time will be described below.

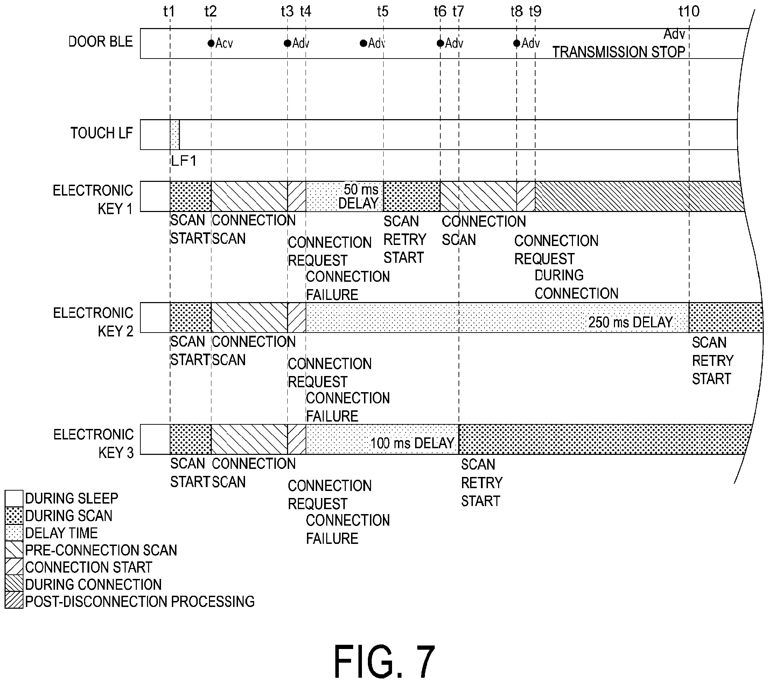

FIG. 7 is a timing chart for describing a first modification example of the delay time.

In the first modification example, the key controller of each of the electronic keys 1, 2, and 3 includes a random number generator generating a random number.

In the shown example, the electronic key 1 generates a random number of 1, the electronic key 2 generates a random number of 5, the electronic key 3 generates a random number of 2, and the delay times are set to values obtained by multiplying the advertisement interval T by the random numbers generated by the electronic keys 1, 2, and 3, that is, the advertisement interval T × the random numbers.

The electronic key 1 starts a scan retry at t5 after a delay time of 50 ms (= 50 × 1), the electronic key 2 starts a scan retry at t10 after a delay time of 250 ms (= 50 × 5), and the electronic key 3 starts a scan retry at t7 after a delay time of 100 ms (= 50 × 2).

At t6, the electronic key 1 receives a BLE advertisement signal and starts a connection scan. At t8, the electronic key 1 receives the next BLE advertisement signal and transmits a connection request. At t9, the connection of the electronic key 1 is completed.

In this way, by using the random number, it is possible not to fix an electronic key succeeding in connection.

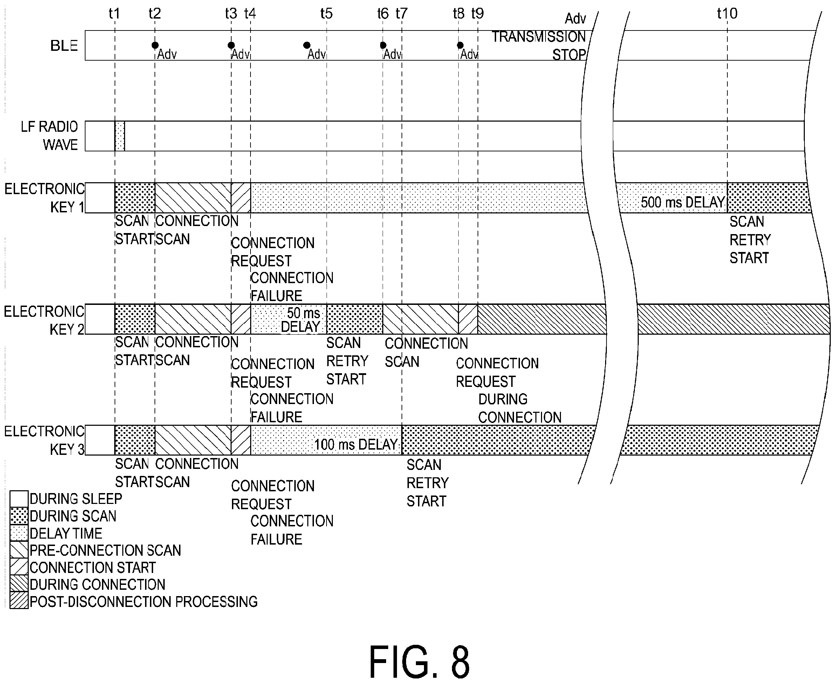

FIG. 8 is a timing chart for describing a second modification example of the delay time.

In the second modification example, the controller of the locking/unlocking device includes a random number generator generating a random number, incorporates the generated random number into LF data, and transmits the LF data as a LF radio wave.

In the shown example, it is assumed that the electronic keys 1, 2, and 3 have ID codes of 1, 2, and 3 unique to the electronic keys 1, 2, and 3, respectively, and receive a random number of 108.

Further, a remainder obtained by dividing, by 10, a value obtained by adding a remainder obtained by dividing the random number by 10 and the ID code is calculated, and a sum of a value obtained by multiplying the calculated remainder by the advertisement interval T and the advertisement interval T, that is, {(the random number % 10 + the ID code) % 10 × the advertisement interval T + the advertisement interval T} is set as the delay time.

The electronic key 1 starts a scan retry at t10 after a delay time of 500 ms ((8 + 1) % 10 × 50 + 50), the electronic key 2 starts a scan retry at t5 after a delay time of 50 ms ((8 + 2) % 10 × 50 + 50), and the electronic key 3 starts a scan retry at t7 after a delay time of 100 ms ((8 + 3) % 10 × 50 + 50).

At t6, the electronic key 2 receives a BLE advertisement signal and starts a connection scan. At t8, the electronic key 2 receives the next BLE advertisement signal and transmits a connection request. At t9, the connection of the electronic key 2 is completed.

In this way, the controller of the locking/unlocking device may generate a random number, and by using this random number, it is possible not to fix an electronic key succeeding in connection.

In the present invention, the plurality of electronic keys connectable to the locking/unlocking device have delay times different from each other. The delay times are preferably determined based on at least one of the ID codes unique to the electronic keys or the random number.

Although not illustrated, both the key controller of each electronic key and the controller of the locking/unlocking device may include a random number generator generating a random number, and the delay time may be set based on these two random numbers.

Although unlocking of the electronic lock has been described above, the same also applies to locking of the electronic lock. When a plurality of users (for example, a parent and a child) each have the electronic key and go out together, and the users attempt to lock the electronic lock by pressing the buttons, the present invention does not cause a problem in that wireless communications by the plurality of electronic keys collides with each other.

The present invention is not limited to the above-described embodiment.

The locking/unlocking device is only required to be provided near the door, and may be provided at a side wall of the door, for example. In this case, the button is also provided at the wall side.

The button may be a push button or an optical touch button.

The number of the electronic keys is not limited to three, but can be any number.

In the above-described embodiment, the locking/unlocking device transmits an LF radio wave when the button is pressed. However, when power consumption is not considered, the locking/unlocking device may always transmit an LF radio wave at regular intervals. Similarly, although the electronic key starts a BLE scan when receiving an LF radio wave. However, for example, the electronic key may start a BLE scan at a timing when a button provided at the electronic key is pressed.

In the above-described embodiment, an LF radio wave and BLE are used for wireless communication between the electronic key and the locking/unlocking device, but another communication method may be employed. For example, wireless communication may be performed using any other frequency band instead of an LF radio wave. For example, instead of BLE, any other short-range wireless communication method employing advertising may be used.

The present invention is also applicable to a passenger car, a power assisted bicycle, and the like.

Note that the communication device is not limited to the electronic key, and may be a device capable of performing wireless communication such as a smartphone. In this case as well, the configuration and operation described above with respect to the electronic key are similarly applied.

### Reference Signs List

1, 2, 3 ... Electronic key, 1b ... Key communication unit, 1d... Key controller, 10 ... Locking/unlocking device, 10a ... Detection unit, 10b ... Communication unit, 10c ... Locking/unlocking unit, 10d ... Controller, 100 ... Door, 101 ... Outer surface, 400 ... Outer door handle, 500 ... Button

## Claims

1. A communication device starting connection to a locking/unlocking device provided near a door of a building when receiving an advertisement signal transmitted from the locking/unlocking device, wherein
the communication device is configured to retry a scan for receiving the advertisement signal after a delay time different from a delay time of another communication device connectable to the locking/unlocking device when the communication device determines the connection failed.

2. The communication device according to claim 1, wherein
the delay time is determined based on at least one of an ID code unique to the communication device or a random number.

3. The communication device according to claim 2, wherein
the delay time is a value obtained by multiplying an advertisement interval by the ID code, the advertisement interval being a transmission interval of the advertisement signal, or
the delay time is a value obtained by multiplying the advertisement interval by a random number generated by the communication device.

4. A system comprising:
a locking/unlocking device provided near a door of a building; and
a plurality of the communication devices according to any of claims 1 to 3, the plurality of communication devices being configured to connect to the locking/unlocking device.

5. The system according to claim 4, wherein
the locking/unlocking device is provided at the door of the building or at a wall next to the door.

6. The system according to claim 4, wherein
when connection of one communication device of the plurality of communication devices is completed, the locking/unlocking device stops transmission of the advertisement signal until the one communication device is disconnected.

7. The system according to claim 6, wherein
the communication device other than the one communication device continues to retry a scan for receiving the advertisement signal for a predetermined scan timeout period, and
a time point after elapse of the predetermined scan timeout period is set before a time point at disconnection of the one communication device.

8. The system according to claim 6, wherein
the communication device other than the one communication device continues a connection scan for receiving a next advertisement signal for a predetermined connection timeout period, and
a time point after elapse of the predetermined connection timeout period is set before a time point at disconnection of the one communication device.

9. The system according to claim 4, wherein
after an unlocking operation is performed by a user on the locking/unlocking device, the locking/unlocking device shortens, by a predetermined period, an advertisement interval being a transmission interval of the advertisement signal.

10. The system according to claim 4, wherein
the locking/unlocking device transmits a random number generated by the locking/unlocking device as a radio wave, and
the delay time is a sum of a value obtained by multiplying a remainder by an advertisement interval and the advertisement interval, the advertisement interval being a transmission interval of the advertisement signal, the reminder being obtained by dividing, by 10, a value obtained by adding a remainder obtained by dividing the random number by 10 and an ID code unique to the communication device.

11. A non-transitory computer readable medium storing a program for controlling a communication device connecting in a wirelessly communicable manner to a locking/unlocking device provided near a door of a building, the program causing a computer to execute:
starting a scan for receiving an advertisement signal;
receiving the advertisement signal from the locking/unlocking device;
starting connection to the locking/unlocking device; and
retrying a scan for receiving the advertisement signal, after a delay time different from a delay time of another communication device connectable to the locking/unlocking device when determining the connection failed.
